# EUROPEAN PATENT APPLICATION

(11) **EP 4 524 630 A1**
(43) Date of publication of application: **19.03.2025**
(21) Application number: 23803580.2
(22) Date of filing: 10.05.2023
(51) Int. Cl.: G02B 6/44

(54) **OPTICAL FIBER RIBBON**

(30) Priority: 11.05.2022 JP 2022078228
(71) Applicant: SUMITOMO ELECTRIC INDUSTRIES, LTD., Osaka-shi, Osaka 541-0041 (JP)
(72) Inventor: SATO, Toshihisa, Osaka-shi, Osaka 541-0041 (JP); FUJII, Takashi, Osaka-shi, Osaka 541-0041 (JP)
(74) Representative: Müller-Boré & Partner Patentanwälte PartG mbB
(86) International application number: PCT/JP2023/017572
(87) International publication number: WO 2023/219105

(57) **Abstract**

An optical fiber ribbon (1A) comprises a plurality of optical fibers (11) arranged in parallel to a direction orthogonal to the longitudinal direction thereof. In at least a portion of the plurality of optical fibers (11), a plurality of connecting parts (21a) that connect the optical fibers (11) adjacent to each other are provided intermittently in the longitudinal direction. Each of the connecting parts (21a) is configured such that tear stress that occurs when being torn in the longitudinal direction exhibits a plurality of peaks. The tear stress exhibits a first peak (PA1) indicating the greatest tear stress, and a second peak (PA2) indicating a tear stress different from the greatest tear stress. The tear stress at the first peak (PA1) is at least 0.01 N, and the tear stress at the second peak (PA2) is at least 50% of the tear stress at the first peak (PA1).

## Description

### TECHNICAL FIELD

The present disclosure relates to an optical fiber ribbon.

The present application claims priority based on Japanese Patent Application No. 2022-078228 filed on May 11, 2022, and incorporates all the contents described in the Japanese Application.

### BACKGROUND ART

Patent Literature 1 discloses an optical fiber ribbon in which connecting portions that connect two adjacent optical fibers are intermittently provided in the longitudinal direction and in the width direction of the ribbon. The tearing strength of the connecting portion is 1.50 gf to 21.0 gf.

Patent Literature 2 discloses an optical fiber ribbon including a plurality of optical fibers each having a colored layer, and a plurality of connecting portions each connecting two adjacent optical fibers. The adhesion between the colored layer and the connecting portion is 0.38 N/mm² or more and 4.30 N/mm² or less, and the tearing strength for tearing the connecting portion is 1.0 gf or more and 17.0 gf or less.

### CITATION LIST

### PATENT LITERATURE

Patent Literature 1:JP2013-182157A
Patent Literature 2:JP2019-168553A

### SUMMARY OF INVENTION

An optical fiber ribbon of the present disclosure including:
a plurality of optical fibers arranged in parallel in a direction perpendicular to a longitudinal direction,
in which, in at least a part of the plurality of optical fibers, a plurality of connecting portions that connect adjacent optical fibers are intermittently provided in the longitudinal direction,
in which one of the plurality of connecting portions is configured such that, when the one connecting portion is torn in the longitudinal direction, a tearing stress has a plurality of peaks,
in which the tearing stress has a first peak that indicates a maximum tearing stress, and a second peak that indicates a tearing stress different from the maximum tearing stress,
in which a tearing stress of the first peak is 0.01 N or more, and
in which a tearing stress of the second peak is 50% or more of the tearing stress of the first peak.

### BRIEF DESCRIPTION OF DRAWINGS

[FIG. 1] FIG. 1 is a cross-sectional view showing an optical fiber ribbon according to a first embodiment.
[FIG. 2] FIG. 2 is a plan view of the optical fiber ribbon shown in FIG. 1.
[FIG. 3] FIG. 3 is a graph showing the relationship between the tearing stress and the tearing length of a connecting portion of the optical fiber ribbon shown in FIG. 1 when the connecting portion is torn.
[FIG. 4] FIG. 4 is a graph showing the relationship between the tearing stress and the tearing length of a connecting portion when an optical fiber ribbon according to a comparative example is torn.
[FIG. 5] FIG. 5 is a schematic view showing a method for measuring the tearing stress of the connecting portion.
[FIG. 6] FIG. 6 is a cross-sectional view showing an optical fiber ribbon according to a second embodiment.
[FIG. 7] FIG. 7 is a plan view of the optical fiber ribbon shown in FIG. 6.
[FIG. 8] FIG. 8 is a graph showing the relationship between the tearing stress and the tearing length of a connecting portion of the optical fiber ribbon shown in FIG. 6 when the connecting portion is torn.
[FIG. 9] FIG. 9 is a cross-sectional view showing an optical fiber ribbon according to a modification.

### DESCRIPTION OF EMBODIMENTS

### (Problem to be Solved by Present Disclosure)

When the strength of the connecting portion of the optical fiber ribbon is small, in a case where a bending force or other such force is applied to the optical fiber ribbon or the cable on which the optical fiber ribbon is mounted, the connecting portion may be torn. In this case, the individual optical fibers are likely to be scattered, and the handling property of the optical fiber ribbon may deteriorate.

The present disclosure provides an optical fiber ribbon that can prevent deterioration in handling property.

### (Description of Embodiments of Present Disclosure)

First, an embodiment of the present disclosure will be listed and described.
(1) An optical fiber ribbon according to an aspect of the present disclosure includes:
   a plurality of optical fibers arranged in parallel in a direction perpendicular to a longitudinal direction,
   in which, in at least a part of the plurality of optical fibers, a plurality of connecting portions that connect adjacent optical fibers are intermittently provided in the longitudinal direction,
   in which one of the plurality of connecting portions is configured such that, when the one connecting portion is torn in the longitudinal direction, a tearing stress has a plurality of peaks,
   in which the tearing stress has a first peak that indicates a maximum tearing stress, and a second peak that indicates a tearing stress different from the maximum tearing stress,
   in which a tearing stress of the first peak is 0.01 N or more, and
   in which a tearing stress of the second peak is 50% or more of the tearing stress of the first peak.

According to the present disclosure, in the connecting portion, there are a plurality of peaks in stress that are generated when the connecting portion is torn. That is, even when a tearing force is applied to the connecting portion, the connecting portion is not likely to tear completely at once and is torn little by little. Therefore, the optical fibers are less likely to be scattered, and deterioration in the handling property of the optical fiber ribbon can be prevented.

According to the present disclosure, the tearing stress of the first peak, which is the maximum tearing stress, is 0.01 N or more. Therefore, even when a slight force of less than 0.01 N is applied to the connecting portion, the connecting portion is not torn. Therefore, deterioration in the handling property of the optical fiber ribbon can be prevented.

According to the present disclosure, the tearing stress of the second peak is 50% or more of the tearing stress of the first peak. Even when a crack is formed in the connecting portion against the tearing stress of the first peak, the crack does not expand unless a relatively strong force of 50% or more of the tearing stress of the first peak is applied. Therefore, the optical fibers are less likely to be scattered, and deterioration in the handling property of the optical fiber ribbon can be prevented.

(2) In the above (1), an elastic modulus of the one connecting portion may be 1 GPa or more and 5 GPa or less.

According to the present disclosure, the elastic modulus of the connecting portion is 1 GPa or more. Therefore, it is possible to prevent the connecting portion from being damaged by a minute external force. Since the elastic modulus of the connecting portion is 5 GPa or less, the transmission loss due to the lateral pressure on the optical fiber ribbon at a low temperature can be reduced.

(3) In the above (1) or (2), a tensile breaking strength of the one connecting portion may be 20 MPa or more.

According to the present disclosure, since the tensile breaking strength of the connecting portion is 20 MPa or more, the optical fibers are less likely to be scattered, and the handling property of the optical fiber ribbon is improved.

(4) In any one of the above (1) to (3), the tearing stress of the first peak may be 0.03 N or more.

According to the present disclosure, since the tearing stress of the first peak is 0.03 N or more, it is possible to improve the effect of making the connecting portion less likely to tear.

(5) In any one of the above (1) to (3), a first length of the one connecting portion may be the same as a second length of the one connecting portion, that the first length being a length of the one connecting portion torn in the longitudinal direction when a force equivalent to the tearing stress of the first peak is applied to the one connecting portion, the second length being a length of the one connecting portion torn in the longitudinal direction when a force equivalent to the tearing stress of the second peak is applied to the one connecting portion.

According to the present disclosure, the first length of the connecting portion that is torn in the longitudinal direction when a force equivalent to the tearing stress of the first peak is applied to the connecting portion is the same as the second length of the connecting portion that is torn in the longitudinal direction when a force equivalent to the tearing stress of the second peak is applied to the connecting portion, and the connecting portion is torn at every predetermined length. That is, since the entire connecting portion is not torn at once, the optical fibers are less likely to be scattered, and deterioration in the handling property of the optical fiber ribbon can be prevented.

### (Effects of Present Disclosure)

According to the present disclosure, it is possible to provide an optical fiber ribbon that can prevent deterioration in handling property.

### (Details of Embodiment of Present Disclosure)

A specific example of an optical fiber ribbon according to an embodiment of the present disclosure will be described with reference to the drawings.

It should be noted that the present disclosure is not limited to these examples, but is indicated by claims, and is intended to include all changes within the meaning and scope equivalent to the claims.

### (First Embodiment)

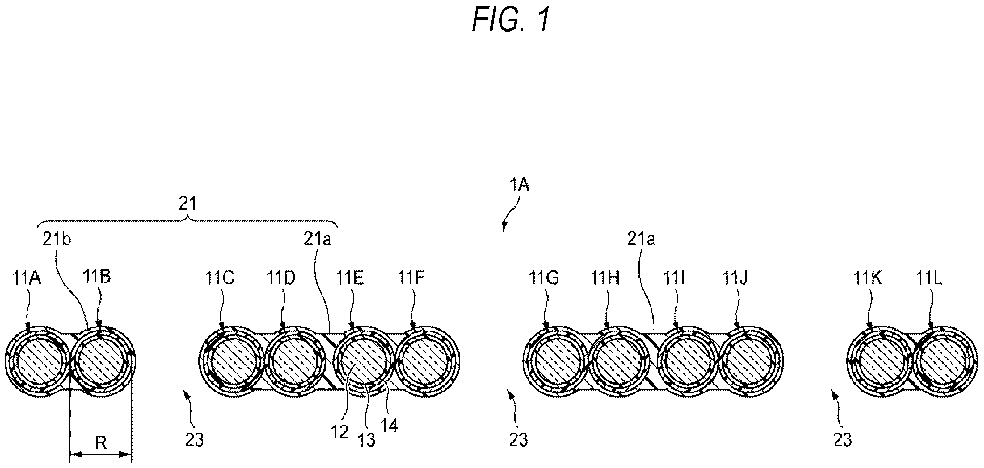

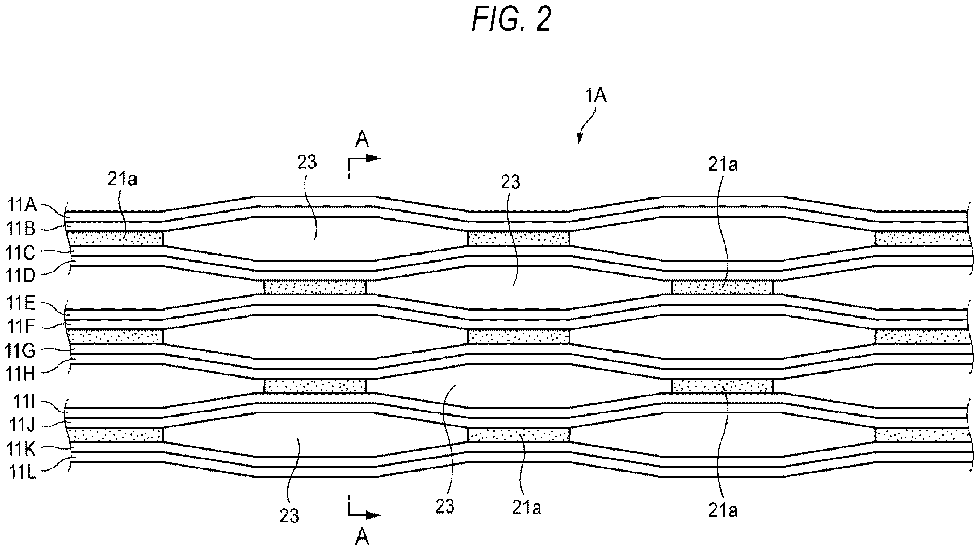

FIG. 1 is a cross-sectional view showing an optical fiber ribbon 1A according to a first embodiment. FIG. 2 is a plan view of the optical fiber ribbon 1A. FIG. 1 is a cross-sectional view taken along a line A-A of the optical fiber ribbon 1A shown in FIG. 2.

As shown in FIGS. 1 and 2, in the optical fiber ribbon 1A, a plurality of (12 in this example) optical fibers 11 (11A to 11L in this example) are arranged in parallel in a direction perpendicular to the longitudinal direction.

Each of the optical fibers 11 includes, for example, a glass fiber 12 that includes a core and a cladding, and two coating layers 13 and 14 that cover the periphery of the glass fiber 12. The optical fiber 11 may have a colored layer. The inner coating layer 13 of the two coating layers is made of a cured product of a primary resin. The outer coating layer 14 of the two coating layers is made of a cured product of a secondary resin.

In the primary resin of the inner coating layer 13 that is in contact with the glass fiber 12, a soft resin having a relatively low Young's modulus is used as a buffer layer. In the secondary resin of the outer coating layer 14, a hard resin having a relatively high Young's modulus is used as a protective layer. The Young's modulus of the cured product of the secondary resin is, at the room temperature (for example, 23°C), 900 MPa or more, preferably 1000 MPa or more, and more preferably 1500 MPa or more.

The secondary resin of the outer coating layer 14 is preferably an ultraviolet-curable resin composition containing a urethane acrylate oligomer, a monomer, and a photopolymerization initiator.

An outer diameter R of the optical fibers 11 (11A to 11L) is 180 µm or more and 250 µm or less. In the optical fiber ribbon 1A according to this example, the outer diameter R is 200 µm.

In this example, the number of fibers in the optical fiber ribbon 1A is set to 12, but the number is not limited thereto. The number of fibers in the optical fiber ribbon 1A may be, for example, 24 or 48.

In the optical fiber ribbon 1A, the 12 optical fibers 11A to 11L alternate between being spaced apart from each other and being in contact with each other for every N fibers. The optical fibers 11A to 11L in this example are arranged such that adjacent optical fibers alternate between being spaced apart by a certain distance and being in contact with each other for every two fibers. The 12 optical fibers 11A to 11L arranged in parallel are all connected together by a connecting resin 21.

As shown in FIG. 2, a plurality of connecting portions 21a are intermittently provided in the longitudinal direction of the plurality of optical fibers 11. Similarly, a plurality of non-connecting portions 23 are intermittently formed in the longitudinal direction of the plurality of optical fibers 11. The optical fiber ribbon 1A is an intermittently connected type optical fiber ribbon in which the connecting portion 21a and the non-connecting portion 23 are intermittently provided in the longitudinal direction for every two optical fibers. The plan view in FIG. 2 shows a state in which the non-connecting portion 23 is opened in the parallel direction of the optical fibers 11.

The connecting resin 21 of the optical fiber ribbon 1A covers the outer periphery of each of the optical fibers 11. In the connecting resin 21, the plurality of connecting portions 21a that connect adjacent optical fibers 11 are provided in at least a part of the plurality of optical fibers 11. Further, the connecting resin 21 is provided with an outer periphery coating portion 21b that covers the outer periphery of each of the optical fibers 11 (FIG. 1). The connecting portion 21a and the outer periphery coating portion 21b are formed of the same resin. The optical fiber ribbon 1A is provided with a plurality of non-connecting portions 23 in which adjacent optical fibers are not connected.

In the optical fiber ribbon 1A according to this example, in a cross-sectional view perpendicular to the longitudinal direction, the connecting portion 21a is provided between the optical fibers 11D and 11E and between the optical fibers 11H and 111. The non-connecting portions 23 are provided between the optical fibers 11B and 11C, between the optical fibers 11F and 11G, and between the optical fibers 11J and 11K. On the other hand, the optical fibers 11A and 11B, 11C and 11D, 11E and 11F, 11G and 11H, 11I and 11J, and 11K and 11L that are adjacent to each other are arranged such that there is no gap between the optical fibers.

The elastic modulus of the connecting resin 21 (the connecting portion 21a and the outer periphery coating portion 21b) is 1 GPa or more and 5 GPa or less at the room temperature (for example, 23°C). The elastic modulus of the connecting portion 21a in this example is 2.5 GPa or more and 2.8 GPa or less. The elastic modulus of the connecting resin 21 can be measured using a nanoindenter (Hysitron TI 950 Tribolndenter manufactured by Bruker) by a test method based on ISO 14577 as an elastic modulus of a cured adhesive resin in the thickness direction. In this example, the indentation depth was 100 nm, and the elastic modulus of the connecting resin 21 was measured using a Berkovich indenter. The Young's modulus of the connecting portion 21a is, for example, 868 MPa at the room temperature (for example, 23°C). The tensile breaking strength of the connecting portion 21a is 20 MPa or more. The connecting portion 21a in this embodiment has a tensile breaking strength of, for example, 33 MPa and a breaking elongation of 39%. Examples of the connecting resin 21 include an ultraviolet-curable resin and a thermosetting resin.

The adhesion between the outermost layer of the optical fiber 11 and the connecting resin 21 is preferably large. For example, the connecting resin 21 may contain a ketone-based solvent. Accordingly, the adhesion with the outermost layer of the optical fiber 11 is increased. Accordingly, the connecting resin 21 is less likely to peel off from the optical fiber 11, and the optical fiber 11 is less likely to be scattered.

As the index of the adhesion, for example, the tearing stress necessary to peel the connecting resin 21 from the outer peripheral surface of the optical fiber 11 is exemplified.

The tearing stress of the connecting portion 21a is measured as follows. A cut is formed, by a knife or a razor, in the connecting portion 21a formed in the center of one end of the optical fiber ribbon 1A in the width direction (the parallel direction of the optical fibers 11), and the end portion of the 12-core optical fiber ribbon 1A is cleaved into groups of six cores. The ends of the outer periphery coating portions 21b of the separated six cores are gripped and pulled at a speed of 200 mm/min in the direction that is perpendicular to the longitudinal direction and the width direction, and the tensile force at this time is measured as the tearing stress.

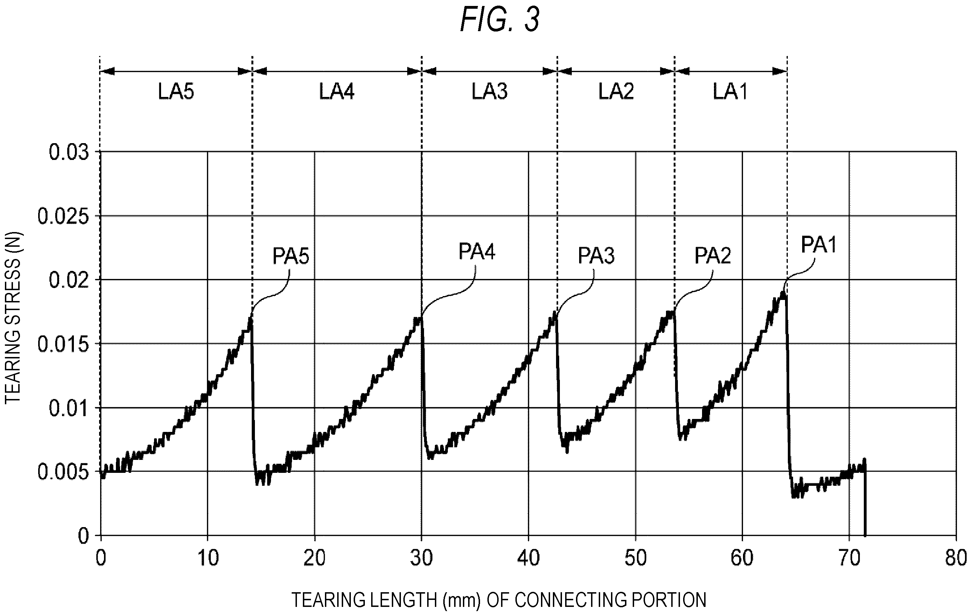

FIG. 3 is a graph showing the relationship between the tearing stress and the tearing length of one connecting portion 21a of the optical fiber ribbon 1A when the connecting portion 21a is torn. As shown in FIG. 3, the connecting portion 21a in this example is implemented such that, when the connecting portion 21a is torn in the longitudinal direction, the tearing stress has a plurality of peaks. In other words, when a force equivalent to the tearing stress is applied to the connecting portion 21a, the connecting portion 21a is not completely torn by a single force, but is torn little by little through a plurality of peaks. The tearing stress of the connecting portion 21a has a first peak PA1 that indicates the maximum tearing stress, and a second peak PA2 that indicates a tearing stress different from the maximum tearing stress. The tearing stress of the first peak PA1, which is the maximum tearing stress, is 0.01 N or more. The tearing stress of the second peak PA2 is 50% or more of the tearing stress of the first peak PA1.

The tearing stress of the connecting portion 21a further has a third peak PA3, a fourth peak PA4, and a fifth peak PA5 that are different from the tearing stresses of the first peak PA1 and the second peak PA2. The second peak PA2, the third peak PA3, the fourth peak PA4, and the fifth peak PA5 are examples of the second peak that is 50% or more of the tearing stress of the first peak.

When a force equivalent to the tearing stress of the fifth peak PA5 is applied to the connecting portion 21a, a crack is formed in the connecting portion 21a in the longitudinal direction. The length of the connecting portion 21a that is torn at this time is defined as a fifth length LA5. After the connecting portion 21a is torn by the fifth length LA5, when a force equivalent to the tearing stress of the fourth peak PA4 is subsequently applied to the connecting portion 21a, the crack formed at the fifth peak PA5 expands, and the connecting portion 21a is further torn in the longitudinal direction. The length of the connecting portion 21a that is torn at this time is defined as a fourth length LA4. Thereafter, when a force equivalent to the tearing stress of the third peak PA3 is applied, the connecting portion 21a is torn by a third length LA3, when a force equivalent to the tearing stress of the second peak PA2 is applied, the connecting portion 21a is torn by a second length LA2, and when a force equivalent to the tearing stress of the first peak PA1 is applied, the connecting portion 21a is torn by a first length LA1.

In this example, the tearing stress of the fifth peak PA5 is, for example, 0.016 N, and the fifth length LA5 of tearing is, for example, approximately 13 mm. The tearing stress of the fourth peak PA4 is, for example, 0.016 N, and the fourth length LA4 of tearing is, for example, approximately 13 mm. The tearing stress of the third peak PA3 is, for example, 0.016 N, and the third length LA3 of tearing is, for example, approximately 10 mm. The tearing stress of the second peak PA2 is, for example, 0.016 N, and the second length LA2 of tearing is, for example, approximately 10 mm. The tearing stress of the first peak PA1 is, for example, 0.018 N, and the first length LA1 is, for example, approximately 10 mm.

In this way, the tearing stress of the second peak PA2 is the same as the tearing stress of the first peak PA1 (90% of the tearing stress of the first peak PA1). The first length LA1 is the same as the second length LA2, the third length LA3, the fourth length LA4, or the fifth length LA5. In this example, "the same length" is not a case in which two lengths are completely the same, but a case in which one length is within ±30% of the other length.

The length of the torn connecting portion 21a may vary depending on the adhesion between the optical fiber 11 and the connecting portion 21a (the connecting resin 21) in addition to the tearing stress. In other words, when a force equivalent to the tearing stress is applied to the connecting portion 21a, the connecting portion 21a is broken, so that a crack may be formed between adjacent optical fibers. When the connecting resin 21 forming the connecting portion 21a is peeled off from the optical fiber 11, a crack may be formed between adjacent optical fibers.

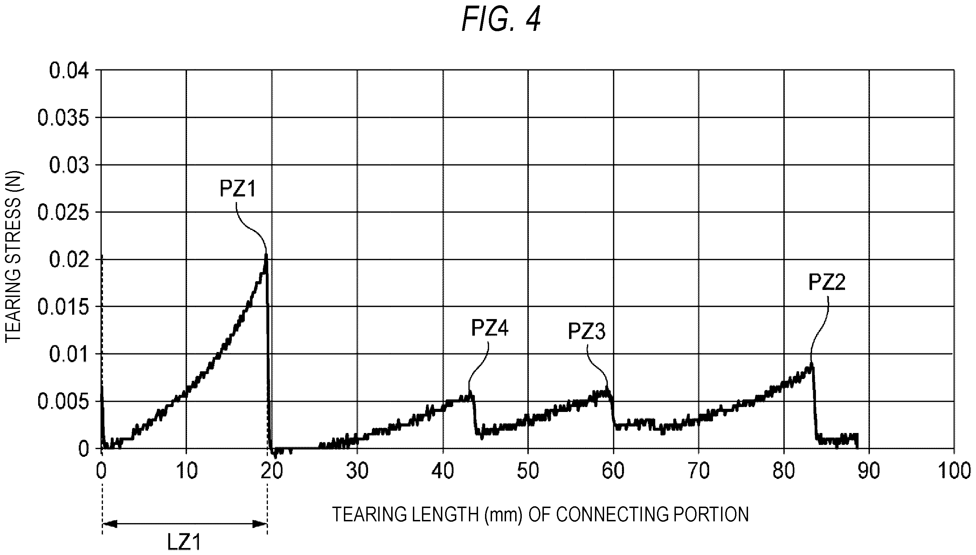

FIG. 4 is a graph showing the relationship between the tearing stress and the tearing length of the connecting portion 21a of an optical fiber ribbon 1Z according to a comparative example when the connecting portion 21a is torn. The elastic modulus of the connecting resin 21 (the connecting portion 21a and the outer periphery coating portion 21b) of the optical fiber ribbon 1Z is 1.5 GPa at the room temperature (for example, 23°C). In the optical fiber ribbon 1Z, the Young's modulus of the connecting portion 21a is 115 MPa at the room temperature (for example, 23°C), the tensile breaking strength of the connecting portion 21a is, for example, 16 MPa, and the breaking elongation of the connecting portion 21a is 38%. When the peeling strength of the optical fiber ribbon 1A according to the first embodiment is taken as 1 as a reference, the peeling strength of the optical fiber ribbon 1Z according to the comparative example is 0.2 or more and 0.3 or less. Except for the difference in the physical properties of the connecting resin 21, the configuration of the optical fiber ribbon 1Z is similar to the configuration of the optical fiber ribbon 1A, and thus the description thereof will be omitted.

As shown in FIG. 4, the connecting portion 21a of the optical fiber ribbon 1Z according to the comparative example is implemented such that, when torn in the longitudinal direction, the tearing stress has a plurality of peaks. However, the optical fiber ribbon 1Z differs from the optical fiber ribbon 1A according to this example in that the tearing stress of a second peak PZ2 is not 50% or more of the tearing stress of a first peak PZ1. In the optical fiber ribbon 1Z according to the comparative example, the tearing stress of the first peak PZ1 is, for example, 0.02 N, and the tearing stress of the second peak PZ2 is, for example, 0.009 N. That is, the tearing stress of the second peak PZ2 is approximately 45% of the tearing stress of the first peak PZ1. The tearing stress of a third peak PZ3 and the tearing stress of a fourth peak PZ4 are both approximately 0.005 N, and are approximately 25% of the tearing stress of the first peak PZ1.

In the optical fiber ribbon 1Z according to the comparative example, a force equivalent to the tearing stress of the first peak PZ1 is applied to the connecting portion 21a to form a crack having a first length LZ1. The first length LZ1 is, for example, 20 mm. Further, in the optical fiber ribbon 1Z, after this crack is formed, when the tearing stress of the fourth peak PZ4, the third peak PZ3, and the second peak PZ2, that is, a relatively weak force that is less than 50% of the tearing stress of the first peak PZ1, is applied to the connecting portion 21a, the crack expands. When the crack expands due to a relatively weak force, the optical fibers 11 are likely to be scattered, and the handling property of the optical fiber ribbon 1Z may deteriorate.

On the other hand, in the optical fiber ribbon 1A in this example, since the tearing stress of the first peak PA1, which is the maximum tearing stress, is 0.01 N or more, even when a minute force of less than 0.01 N is applied to the connecting portion 21a, the connecting portion 21a is not torn. The tearing stress of the second peak PA2 is 50% or more of the tearing stress of the first peak PA1. Accordingly, even when a relatively large tearing force is applied to the connecting portion 21a and a crack is formed in a part of the connecting portion 21a, the crack of the connecting portion 21a does not expand unless a relatively large tearing force is applied again. Therefore, since the optical fibers 11 are less likely to be scattered, and the handling property of the optical fiber ribbon 1A is good, the optical fiber ribbon 1A can be easily subjected to fusion splicing all at once.

The elastic modulus of the connecting portion 21a in this example is 1 GPa or more. Therefore, it is possible to prevent the connecting portion 21a from being damaged by a minute external force. The elastic modulus of the connecting portion 21a is 5 GPa or less. Therefore, the transmission loss due to the lateral pressure on the optical fiber ribbon 1A at a low temperature can be reduced.

The tensile breaking strength of the connecting portion 21a in this example is 20 MPa or more. Since the connecting portion 21a is not broken by a minute force, the optical fiber 11 is less likely to be scattered, and the handling property of the optical fiber ribbon 1A is improved.

In the optical fiber ribbon 1A in this example, the first length LA1 of the connecting portion 21a that is torn in the longitudinal direction when a force equivalent to the tearing stress of the first peak PA1 is applied to the connecting portion 21a is the same as the second length LA2 of the connecting portion 21a that is torn in the longitudinal direction when a force equivalent to the tearing stress of the second peak PA2 is applied to the connecting portion 21a. In other words, the connecting portion 21a of the optical fiber ribbon 1A is torn at any length. That is, since the entire connecting portion 21a is not torn at once, the optical fibers 11 are less likely to be scattered, and deterioration in the handling property of the optical fiber ribbon 1A can be prevented.

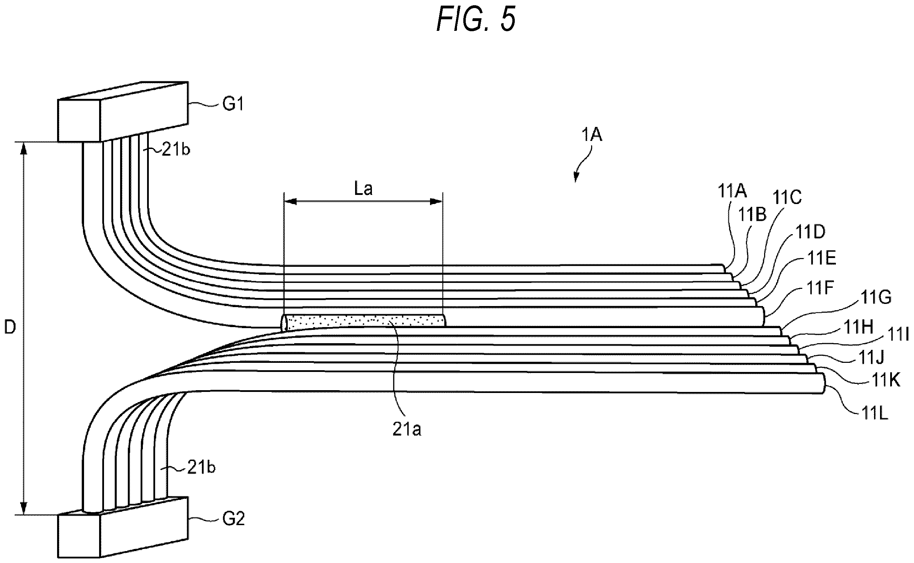

The tearing stress of the connecting portion 21a is measured as follows. FIG. 5 is a schematic view showing a method for measuring the tearing stress of the connecting portion 21a. As shown in FIG. 5, in the optical fiber ribbon 1A, the outer periphery coating portion 21b of the six optical fibers 11A to 11F is gripped by a first gripping portion G1, and the outer periphery coating portion 21b of the six optical fibers 11G to 11L is gripped by a second gripping portion G2. In the upper-lower direction that is perpendicular to the longitudinal direction and the width direction, the first gripping portion G1 is provided above the optical fiber ribbon 1A, and the second gripping portion G2 is provided below the optical fiber ribbon 1A.

The connecting portion 21a is formed between the optical fiber 11F and the optical fiber 11G. A length La of the connecting portion 21a in the longitudinal direction is approximately 40 mm to 90 mm. In the initial state, the first gripping portion G1 and the second gripping portion G2 are separated from each other in the upper-lower direction such that the position of one end of the connecting portion 21a is a position at which the optical fiber 11F begins to bend upward by the first gripping portion G1 and a position at which the optical fiber 11G begins to bend downward by the second gripping portion G2. In other words, in the initial state, the connecting portion 21a connects the optical fiber 11F and the optical fiber 11G over the entire length. An initial distance D between the first gripping portion G1 and the second gripping portion G2 in the upper-lower direction is 70 mm. The length of the optical fiber ribbon 1A measured in the longitudinal direction is 150 mm.

In the present measurement method, the second gripping portion G2 is fixed, and the first gripping portion G1 is moved upward so as to be separated from the second gripping portion G2. The moving speed of the first gripping portion G1 is 200 mm/min. As the first gripping portion G1 moves upward, the optical fiber 11F that is gripped by the first gripping portion G1 is separated from the optical fiber 11G that is gripped by the second gripping portion G2. Thus, the connecting portion 21a that connects the optical fiber 11F and the optical fiber 11G begins to be torn. The force applied to the first gripping portion G1 when the connecting portion 21a is torn is measured as the tearing stress of the connecting portion 21a by a detector (not shown) that is directly or indirectly provided in the first gripping portion G1. At the same time, the length of the torn connecting portion 21a is measured. In the present measurement method, the second gripping portion G2 is fixed and the first gripping portion G1 is moved. Alternatively, the first gripping portion G1 may be fixed and the second gripping portion G2 may be moved.

### (Second Embodiment)

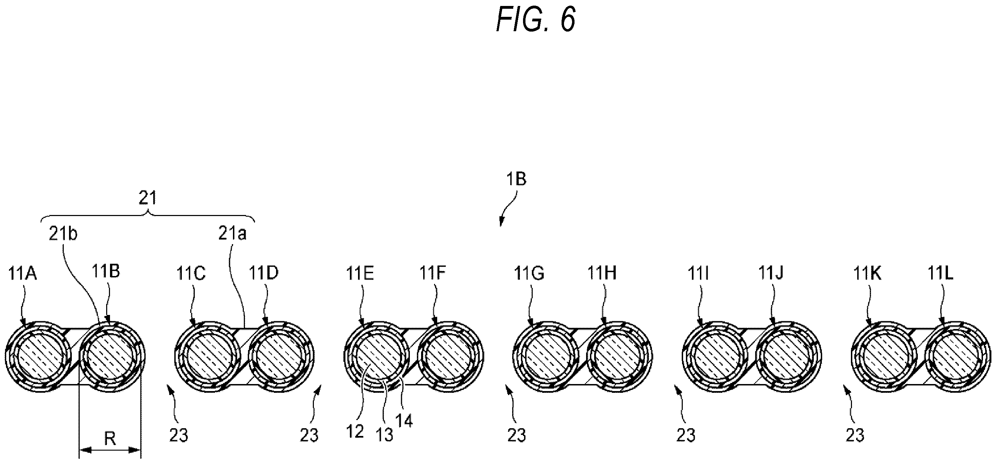

Next, an optical fiber ribbon 1B according to a second embodiment will be described with reference to FIGS. 6 to 8. The same configuration as the optical fiber ribbon 1A according to the first embodiment described above is denoted by the same reference signs, and the description thereof will be omitted.

FIG. 6 is a cross-sectional view of the optical fiber ribbon 1B. The optical fiber ribbon 1B is different from the optical fiber ribbon 1A according to the first embodiment in that adjacent optical fibers alternate between being spaced apart by a certain distance and being connected with each other for every fiber.

In the optical fiber ribbon 1B in this example, the connecting portions 21a are provided between the optical fibers 11A and 11B, between the optical fibers 11C and 11D, between the optical fibers 11E and 11F, between the optical fibers 11G and 11H, between the optical fibers 11I and 11J, and between the optical fibers 11K and 11L. The non-connecting portions 23 are provided between the optical fibers 11B and 11C, between the optical fibers 11D and 11E, between the optical fibers 11F and 11G, between the optical fibers 11H and 11I, and between the optical fibers 11J and 11K. The elastic modulus of the connecting portion 21a in this example is, for example, 2.6 GPa.

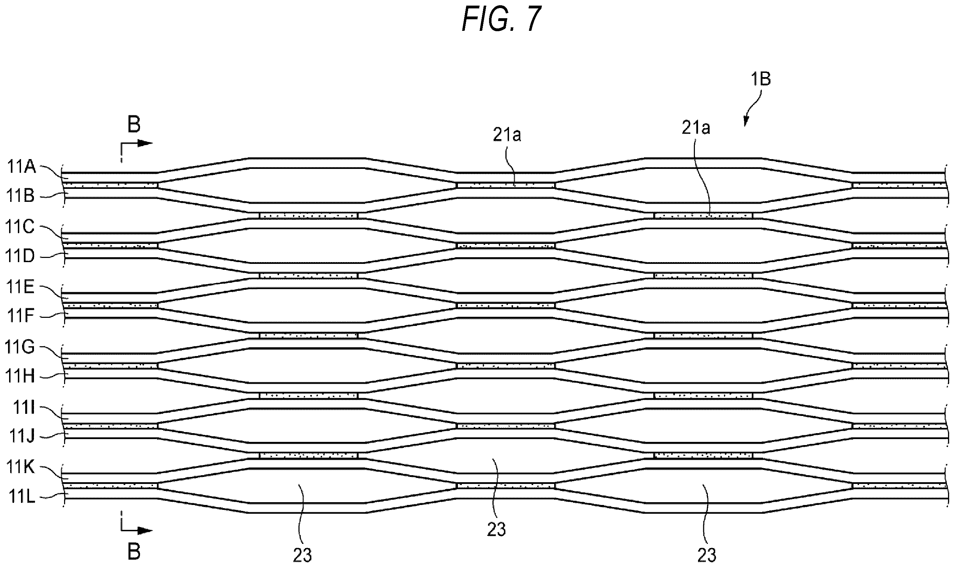

FIG. 7 is a plan view of the optical fiber ribbon 1B. As shown in FIG. 7, a plurality of connecting portions 21a are intermittently provided in the longitudinal direction of the plurality of optical fibers 11. Similarly, a plurality of non-connecting portions 23 are also intermittently formed in the longitudinal direction of the plurality of optical fibers 11. The optical fiber ribbon 1B is an intermittently connected type optical fiber ribbon in which the connecting portion 21a and the non-connecting portion 23 are intermittently provided in the longitudinal direction for every optical fiber. Other configurations are the same as those of the optical fiber ribbon 1A. The plan view in FIG. 7 shows a state in which the non-connecting portion 23 is opened in the parallel direction of the optical fibers 11. FIG. 6 is a cross-sectional view taken along a line B-B of the optical fiber ribbon 1B shown in FIG. 7.

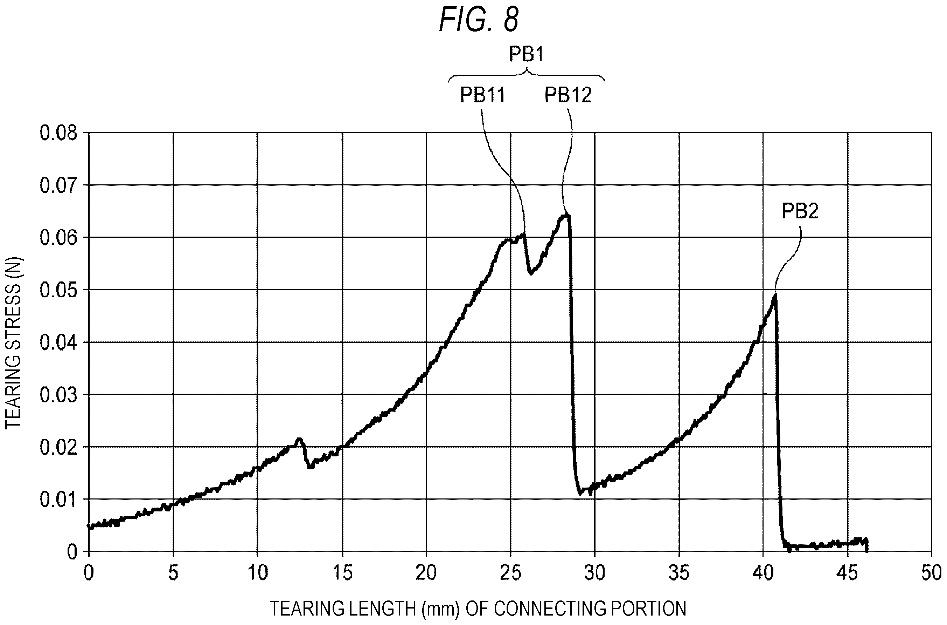

FIG. 8 is a graph showing the relationship between the tearing stress and the tearing length of the connecting portion 21a of the optical fiber ribbon 1B when the connecting portion 21a is torn. As shown in FIG. 8, the connecting portion 21a in this example is also implemented such that, when the connecting portion 21a is torn in the longitudinal direction, the tearing stress has a plurality of peaks. The tearing stress of the connecting portion 21a has a first peak PB1 that indicates the maximum tearing stress, and a second peak PB2 that indicates a tearing stress different from the maximum tearing stress.

The first peak PB1 has two peaks PB11 and PB12, but is considered here as one peak. More specifically, when the tearing stress of the second peak PB12 at the position close to the first peak PB11 is within ±20% of the tearing stress of the first peak PB11, the two peaks PB11 and PB12 are regarded as one peak PB1, and the tearing stress of the first peak PB11 is regarded as the tearing stress of the first peak PB1.

The tearing stress of the first peak PB1, which is the maximum tearing stress, is 0.03 N or more. The tearing stress of the first peak PB1 in this example is, for example, 0.062 N. The tearing stress of the second peak PB2 is 50% or more of the tearing stress of the first peak PB1. The tearing stress of the second peak PB2 in this example is, for example, 0.051 N, and is 83% of the tearing stress of the first peak PB1.

In this way, in this example, since the tearing stress of the first peak PB1 is 0.03 N or more, it is possible to improve the effect of making the connecting portion 21a less likely to tear.

### (Modification)

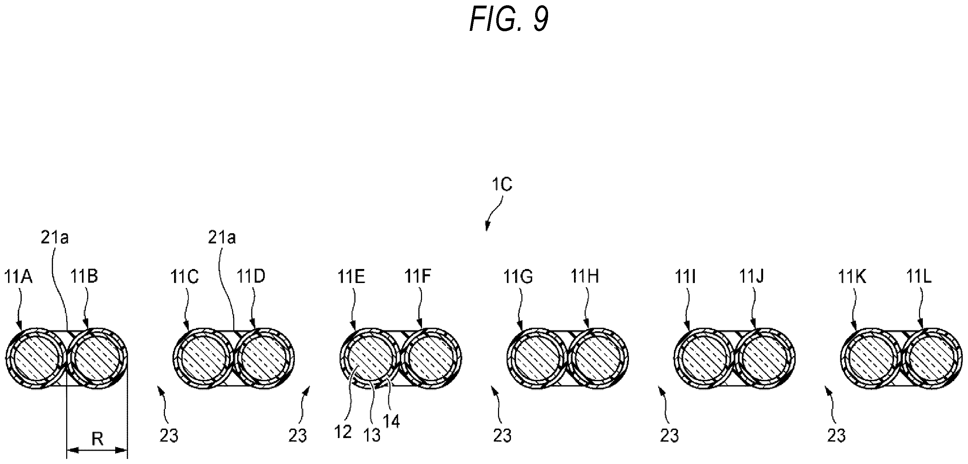

Although the optical fiber ribbons 1A and 1B each include the connecting resin 21 that coats the outer periphery of each of the optical fibers 11, it is not necessary to provide the connecting resin 21 that coats the outer periphery. An optical fiber ribbon 1C according to a modification will be described with reference to FIG. 9. The same configuration as the optical fiber ribbons 1A and 1B according to the first embodiment described above is denoted by the same reference signs, and the description thereof will be omitted.

FIG. 9 is a cross-sectional view of the optical fiber ribbon 1C. The optical fiber ribbon 1C is different from the optical fiber ribbon 1A in that adjacent optical fibers alternate between being spaced apart by a certain distance and being connected with each other for every fiber. Further, the optical fiber ribbon 1C is different from the optical fiber ribbons 1A and 1B in that the optical fiber ribbon 1C does not include the outer periphery coating portion 21b that covers the outer periphery of each of the optical fibers 11. A part of the adjacent optical fibers are connected to each other by the connecting portion 21a.

In the optical fiber ribbon 1C in this example, the connecting portions 21a are provided between the optical fibers 11A and 11B, between the optical fibers 11C and 11D, between the optical fibers 11E and 11F, between the optical fibers 11G and 11H, between the optical fibers 11I and 11J, and between the optical fibers 11K and 11L. The connecting portion 21a is formed such that there is no gap between these two adjacent optical fibers. The non-connecting portions 23 are provided between the optical fibers 11B and 11C, between the optical fibers 11D and 11E, between the optical fibers 11F and 11G, between the optical fibers 11H and 11I, and between the optical fibers 11J and 11K.

Such an optical fiber ribbon 1C has the same effects as the optical fiber ribbons 1A and 1B. In particular, the connecting portion 21a of the optical fiber ribbon 1C is also implemented such that, when the connecting portion 21a is torn in the longitudinal direction, the tearing stress has a plurality of peaks, and the optical fiber ribbon 1C can prevent deterioration in the handling property.

Although the present disclosure has been described in detail with reference to the specific embodiments, it is apparent to those skilled in the art that various changes and modifications can be made without departing from the spirit and scope of the present disclosure. In addition, the number, positions, shapes, and the like of the constituent members described above are not limited to those in the above embodiments, and can be changed to the numbers, positions, shapes, and the like suitable for carrying out the present disclosure.

In the optical fiber ribbon in this example, the connecting portion 21a and the non-connecting portion 23 are formed by providing the connecting resin 21 at a part in the longitudinal direction, but the forming method is not limited thereto. The non-connecting portion 23 may be formed by providing a tape coating that integrally coats the optical fibers 11 and cleaving a part between the optical fibers 11 in the longitudinal direction.

### REFERENCE SIGNS LIST

1A, 1B, 1C, 1Z: optical fiber ribbon
11, 11A, 11B, 11C, 11D, 11E, 11F, 11G, 11H, 11I, 11J, 11K, 11L: optical fiber
12: glass fiber
13: inner coating layer
14: outer coating layer
21: connecting resin
21a: connecting portion
21b: outer periphery coating portion
23: non-connecting portion
D: initial distance
LA1, LZ1: first length
LA2: second length
LA3: third Length
LA4: fourth length
LA5: fifth length
PA1, PB1, PZ1: first peak
PA2, PB2, PZ2: second peak
PA3: third peak
PA4: fourth peak
PA5: fifth peak
PB11, PB12: peak
R: outer diameter

## Claims

1. An optical fiber ribbon comprising:
a plurality of optical fibers arranged in parallel in a direction perpendicular to a longitudinal direction,
wherein, in at least a part of the plurality of optical fibers, a plurality of connecting portions that connect adjacent optical fibers are intermittently provided in the longitudinal direction,
wherein one of the plurality of connecting portions is configured such that, when the one connecting portion is torn in the longitudinal direction, a tearing stress has a plurality of peaks,
wherein the tearing stress has a first peak that indicates a maximum tearing stress, and a second peak that indicates a tearing stress different from the maximum tearing stress,
wherein a tearing stress of the first peak is 0.01 N or more, and
wherein a tearing stress of the second peak is 50% or more of the tearing stress of the first peak.

2. The optical fiber ribbon according to claim 1,
wherein an elastic modulus of the one connecting portion is 1 GPa or more and 5 GPa or less.

3. The optical fiber ribbon according to claim 1 or 2,
wherein a tensile breaking strength of the one connecting portion is 20 MPa or more.

4. The optical fiber ribbon according to any one of claims 1 to 3,
wherein the tearing stress of the first peak is 0.03 N or more.

5. The optical fiber ribbon according to any one of claims 1 to 3,
wherein a first length of the one connecting portion is the same as a second length of the one connecting portion, the first length being a length of the one connecting portion torn in the longitudinal direction when a force equivalent to the tearing stress of the first peak is applied to the one connecting portion, the second length being a length of the one connecting portion torn in the longitudinal direction when a force equivalent to the tearing stress of the second peak is applied to the one connecting portion.
